# EUROPÄISCHE PATENTANMELDUNG

(11) **EP 3 400 854 A1**
(43) Veröffentlichungstag der Anmeldung: **14.11.2018**
(21) Anmeldenummer: 18170495.8
(22) Anmeldetag: 03.05.2018
(51) Int. Cl.: A47J 31/52

(54) **GETRÄNKEAUTOMAT UND VERFAHREN ZUM BETRIEB EINES GETRÄNKEAUTOMATEN IN ABHÄNGIGKEIT EINER NUTZUNGSWAHRSCHEINLICHKEIT**

(30) Priorität: 10.05.2017 DE 102017110070
(71) Anmelder: Vorwerk & Co. Interholding GmbH, 42275 Wuppertal (DE)
(72) Erfinder: Hahn, Pia, 58332 Schwelm (DE); Bapat, Aniket, 40882 Ratingen (DE); Tamm, Steffen, 40219 Düsseldorf (DE); Groom, Sascha, 48607 Ochtrup (DE); Zils, Jürgen, 51399 Burscheid (DE)
(74) Vertreter: Cohausz & Florack

(57) **Zusammenfassung**

Ein Getränkeautomat (2) zur automatischen Zubereitung von Getränken mit mindestens einer Einrichtung (4) zur Zubereitung von Getränken und mit mindestens einem Kommunikationsmodul (8) weist eine Steuereinrichtung (6) auf, die dazu eingerichtet ist, den Getränkeautomaten (2) in Abhängigkeit mindestens einer Information über eine Nutzungswahrscheinlichkeit zu steuern. Die mindestens eine Information über eine Nutzungswahrscheinlichkeit entspricht einem Nutzerverhalten. Beschrieben wird auch ein Verfahren zum Betrieb eines Getränkeautomaten (2), bei dem der Getränkeautomat (2) durch eine Steuereinrichtung (6) in Abhängigkeit von mindestens einer Information über eine Nutzungswahrscheinlichkeit gesteuert wird.

## Beschreibung

Die Erfindung betrifft einen Getränkeautomaten zur automatischen Zubereitung von Getränken mit mindestens einer Einrichtung zur Zubereitung von Getränken, mit mindestens einer Steuereinrichtung und mit mindestens einem Kommunikationsmodul. Weiterhin betrifft die Erfindung ein Verfahren zum Betrieb eines Getränkeautomaten.

Getränkeautomaten für die automatische Zubereitung von warmen Getränken sind bekannt. Solche Getränkeautomaten weisen in der Regel eine integrierte Benutzerschnittstelle in Form eines Knopfpanels mit Anzeigeeinrichtung auf. Die Zubereitung kann somit entsprechend einer Nutzereingabe auf ausgewählte Zubereitungsparameter eingestellt werden. Die Einstellung des Getränkeautomaten erfordert also die Anwesenheit des Nutzers. Ein weiterer Nachteil solcher Getränkeautomaten ist, dass die Nutzereingabe für jede Zubereitung wiederholt werden muss, wenn die Zubereitungsparameter, die dem von dem Nutzer gewünschten Getränk entsprechen, nicht zu einer vorgespeicherten Parameterauswahl gehören. Die Nutzereingabe erweist sich oft als aufwändig und fehlerträchtig.

Weiterhin sind Getränkeautomaten bekannt, die mit einer vorprogrammierten Zeitschaltuhr eingestellt werden, so dass ein Getränk zu einem bestimmten Zeitpunkt zubereitet wird. Einerseits erfordern solche Getränkeautomaten eine oft aufwändige Voreinstellung der Zeitschaltuhr und andererseits ist die Zubereitung nicht an einen sofortigen Nutzerbedarf angepasst. Wenn zum Beispiel eine bestimmt Ausgabeuhrzeit eingestellt worden ist, der Nutzer aber zu diesem Zeitpunkt doch nicht vor Ort ist, wird das Getränk trotzdem zubereitet. In dieser Hinsicht sind solche Getränkeautomaten nicht energiesparend, zumindest nicht in einer optimierten Weise, da deren Betriebsweise nicht an den tatsächlichen und sofortigen Nutzerbedarf angepasst ist.

Der Erfindung liegt demnach die Aufgabe zugrunde, den Bedarf eines Nutzers bei der Zubereitung von Getränken zu berücksichtigen und die Betriebsweise eines Getränkeautomaten energiesparend zu optimieren und zu vereinfachen.

Die Aufgabe wird erfindungsgemäß durch einen Getränkeautomaten zur automatischen Zubereitung von Getränken mit mindestens einer Einrichtung zur Zubereitung von Getränken, mit mindestens einer Steuereinrichtung und mit mindestens einem Kommunikationsmodul gelöst, wobei die Steuereinrichtung dazu eingerichtet ist, den Getränkeautomaten in Abhängigkeit mindestens einer Information über eine Nutzungswahrscheinlichkeit zu steuern und wobei die mindestens eine Information über eine Nutzungswahrscheinlichkeit einem Nutzerverhalten entspricht. Ein solcher Getränkeautomat ermöglicht die an den Bedarf eines Nutzers angepasste Zubereitung eines Getränks ohne praktisches Zutun des Nutzers. Dadurch entfällt die Notwendigkeit einer Nutzereingabe an dem Getränkeautomaten. Weiterhin ist die Betriebsweise des Getränkeautomaten an den tatsächlichen Bedarf des Nutzers angepasst, so dass keine Energie auf unnötige Weise verbraucht wird.

Die Einrichtung zur Zubereitung von Getränken kann eine Brühkammer aufweisen, in der eine feste Zutat aufgegossen und dann während einer bestimmten Brühzeit gebrüht wird. Feste Zutaten können dabei lose Teeblätter, Blüten, Pulver oder ähnliches sein, die frisch oder getrocknet verwendet werden. In den meisten Fällen erfolgt der Aufguss mit heißem Wasser, zum Beispiel für die Zubereitung von Kaffeeoder Teegetränken. Die Brühkammer kann aus verschiedenen Materialien hergestellt sein, wie Glas, Metall oder gegen hohe Temperaturen widerständigen Kunststoff. Die Einrichtung zur Zubereitung von Getränken kann auch eine Filtereinheit sein, wodurch eine Zutat mit einer Flüssigkeit aufgegossen wird. Ein bekanntes Beispiel hierfür sind Kaffeeautomaten für Filterkaffee. Entsprechend der Gestaltung der Einrichtung kann ein Getränk zubereitet und anschließend ausgegeben oder nach der Zubereitung über eine längere Zeit aufbewahrt werden. Die Einrichtung lässt sich so einstellen, dass beliebige Zubereitungsparameter, beispielsweise Zeitpunkt der Zubereitung, Brühtemperatur, Brühzeit, Menge, Stärke und Sorte des Getränks, unabhängig voneinander modifizierbar sind. Auf diese Weise sind die Zubereitung und die Ausgabe des Getränks auf individuelle Vorlieben und Gewohnheiten einstellbar.

Vorzugsweise ist eine Benutzerschnittstelle vorgesehen. Dadurch können Zubereitungsparameter und weitere Einstellungen sowie die Betriebsweise des Getränkeautomaten beliebig modifiziert werden. Die Benutzerschnittstelle kann in dem Getränkeautomaten integriert, zum Beispiel in Form eines Touchscreens, oder tragbar sein. Wenn die Benutzerschnittstelle integriert ist, kann diese mit der Steuereinrichtung des Getränkeautomaten über Kabel verbunden sein. Wenn die Benutzerschnittstelle nicht integriert ist, kann diese über Einstecken, beispielsweise USB-Universal Serial Bus-, Kabelanschluss oder ähnliches, oder über eine kabellose Technologie wie WLAN-Wireless Local Area Network-, Infrarot, Bluetooth oder ähnliches, mit dem mindestens einen Kommunikationsmodul des Getränkeautomaten verbunden sein. Die tragbare Benutzerschnittstelle kann ein Smartphone, eine Smartwatch, eine Fernbedienung, ein Benutzerschnittstelle eines Systems für Haustechnik oder ähnliches sein. Gegebenenfalls ist das Kommunikationsmodul ein Empfänger für Infrarotwellen und/oder über WLAN, Bluetooth oder ähnliches entsprechend der verwendeten Benutzerschnittstelle vernetzt. Weiterhin kann das Kommunikationsmodul mit der Steuereinrichtung verbunden sein.

Die oben aufgezeigte Aufgabe wird gemäß der vorliegenden Erfindung auch durch ein Verfahren zum Betrieb eines zuvor beschrieben Getränkeautomaten gelöst, wobei der Getränkeautomat durch eine Steuereinrichtung in Abhängigkeit von mindestens einer Information über eine Nutzungswahrscheinlichkeit gesteuert wird.

Die Steuereinrichtung ist dazu eingerichtet, den Teeautomaten entsprechend dem zuvor beschriebenen Verfahren zu steuern. Zu diesem Zweck kann die Steuereinrichtung beispielsweise einen Mikroprozessor und einen damit verbundenen digitalen Speicher beziehungsweise Informationsspeicher aufweisen, auf dem Befehle gespeichert sind, deren Ausführung auf dem Mikroprozessor die Durchführung des Verfahrens bewirkt.

Die Nutzungswahrscheinlichkeit ist ein Indikator für eine Wahrscheinlichkeit, dass ein Nutzer den Getränkeautomat an einem bestimmten Zeitpunkt verwenden wird. Jedem Zeitpunkt ist eine Nutzungswahrscheinlichkeit in Form eines Wertes zugewiesen. Die Nutzungswahrscheinlichkeit wird mit in einer Datenbank gespeicherten Schwellenwerten verglichen. Überschreitet der Wert den entsprechenden Schwellenwert, ist die Nutzungswahrscheinlichkeit hoch. Der Getränkeautomat wird dann durch die Steuereinrichtung in Abhängigkeit des Ergebnisses des Vergleichs zwischen dem Wert, der der Nutzungswahrscheinlichkeit entspricht, und dem Schwellenwert gesteuert. Die Datenbank von Schwellenwerten kann in dem Informationsspeicher der Steuereinrichtung gespeichert sein. Die Schwellenwerte können durch die Benutzerschnittstelle eingegeben und/oder modifiziert werden.

Die Nutzungswahrscheinlichkeit ergibt sich aus dem Nutzerverhalten. Das Nutzerverhalten wird durch eine Information oder einen Satz von Informationen abgebildet, die das Verhalten eines Nutzers charakterisieren. Gegebenenfalls kann das Nutzerverhalten mindestens eine Information über eine Bewegung, eine Aktivität, eine Uhrzeit und/oder eine Position sein. Ist zum Beispiel die Position des Nutzers nah an dem Getränkeautomaten, ist die Nutzungswahrscheinlichkeit hoch. Ist der Nutzer nicht im Haus, ist die Nutzungswahrscheinlichkeit sehr niedrig. Aus mehreren Informationen, die verschiedenen Zeitpunkten entsprechen, kann einen Muster erkannt werden und somit Nutzergewohnheiten. Das erkannte Muster kann benutzt werden, um individualisierte Schwellenwerte für die Nutzungswahrscheinlichkeit zu bestimmen. Wenn zum Beispiel der Nutzer jeden Tag der Woche ein Getränk zubereiten lässt, nachdem er morgens im Badezimmer war, kann ein Schwellenwert entsprechend eingestellt sein, so dass ein Getränk zubereitet wird, nachdem der Nutzer zwischen 7 und 9 Uhr im Badezimmer war.

Die Bestimmung der einen oder mehreren Informationen, die das Nutzerverhalten charakterisieren, ist vorzugsweise dadurch ermöglicht, dass die Steuereinrichtung über das mindestens eine Kommunikationsmodul mit mindestens einem Sensor zur Erfassung mindestens einer Information über eine Bewegung, eine Aktivität, eine Uhrzeit und/oder eine Position verbunden ist. Auf diese Weise können individuelle Nutzerverhalten erfasst und somit die Steuerung des Getränkeautomaten an den realen Bedarf des Nutzers angepasst werden.

Wenn der Sensor dazu eingerichtet ist, eine Bewegung zu erfassen, kann die An- oder Abwesenheit des Nutzers erkannt werden. Dies erweist sich als Vorteil in der Hinsicht der Optimierung der Betriebsweise des Getränkeautomaten zum Energiesparen, da der Getränkeautomat so gesteuert werden kann, dass er ausgeschaltet wird, wenn der Nutzer abwesend ist. Weiterhin können dank eines solchen Sensors Informationen für die Bestimmung von Nutzergewohnheiten und somit von Nutzungswahrscheinlichkeiten gewonnen werden. Der Sensor kann beispielsweise eine Kamera, eine optische Einheit oder ein piezoelektrischer Sensor sein. Solche Sensoren können in dem Haus/in der Wohnung platziert sein, wie es zum Beispiel für Bewegungsmelder für das Ein- und Ausschalten von Beleuchtungen der Fall ist. Weitere Vorrichtungen können als Bewegungssensoren benutzt werden, wie zum Beispiel Türklinken oder Lichtschalter, deren manuelle Bedienung eine Anwesenheit anzeigt. Aus einer Kombination einer bekannten Position des Sensors mit einer Information über eine Bewegung kann dann beispielsweise eine Position des Nutzers bestimmt werden..

Der mindestens eine Sensor kann dazu eingerichtet sein, eine Aktivität zu erfassen. Gegebenenfalls kann diese Information mit weiteren Informationen der Datenbank wie zum Beispiel Schwellenwerte oder Nutzergewohnheiten der Vergangenheit verglichen werden, so dass eine Nutzungswahrscheinlichkeit bestimmt wird. Wenn zum Beispiel der Nutzer für gewöhnlich den Getränkeautomat nach einer morgigen sportlichen Aktivität benutzt, ist die Nutzungswahrscheinlichkeit nach einem Jogging um 9 Uhr hoch. Wenn weiterhin ein Schwellenwert für eine Aktivitätsintensität vorgegeben ist und dieser Schwellenwert überschritten wird, soll ein Getränk innerhalb von einer bestimmten Zeit zubereitet werden. Somit ermöglicht der Vergleich der erfassten Aktivität mit dem Schwellenwert die Anpassung der Steuerung des Getränkeautomaten an die erfasste Aktivität. Die Erfassung der Aktivität kann durch eine Smartwatch, eine Kamera oder weiteres erfolgen.

Es kann sich weiterhin als vorteilhaft erweisen, wenn der mindestens eine Sensor dazu eingerichtet ist, eine Dauer und/oder eine Uhrzeit zu erfassen. Insbesondere in Kombination mit einem oder mehreren Sensoren, die dazu eingerichtet sind, Bewegungen oder Aktivitäten zu erfassen, wird die Bestimmung von Nutzergewohnheiten ermöglicht. Weiterhin können eine Dauer und/oder eine Uhrzeit vordefiniert sein, nach deren oder zu der ein Getränk zubereitet sein soll, und somit wird der Getränkeautomat entsprechend gesteuert. Ein solcher Sensor kann eine Uhr, ein Wecker, ein Timer oder ähnliches sein.

Das Kommunikationsmodul dient der Verbindung zwischen der Steuereinrichtung und der Benutzerschnittstelle beziehungsweise der Steuereinrichtung und dem mindestens einen Sensor zu Erfassung von Informationen über ein Nutzerverhalten. Das Kommunikationsmodul kann für das Kommunizieren mit verschiedenen Technologien eingerichtet sein, so dass das Kommunikationsmodul mit einem oder mehreren Sensoren, die jeweils für verschiedene Kommunikationstechnologien eingerichtet sind, verbunden werden kann. Auf diese Weise können Informationen, die durch ein oder mehrere Sensoren erfasst worden sind, zu dem Getränkeautomaten übertragen werden. Unter dem Begriff Kommunikationstechnologie sind unter anderen sowohl Kabelanschlüsse, USB-Anschlüsse als auch kabellosen Technologien wie WLAN, Bluetooth, Infrarot, RFID usw. zu verstehen.

Alternativ kann der mindestens eine Sensor in einem Haushalt- und/oder Gesundheitsgerät integriert sein. Gegebenenfalls können die Sensoren, die sich ohnehin in der Umgebung des Nutzers befinden, für die Erfassung von Informationen bezüglich eines Nutzerverhaltens verwendet werden. Wenn der Getränkeautomat an dem Wohnort des Nutzers benutzt wird, dann können beispielsweise Betriebszustände oder integrierten Sensoren von Haushaltsgeräten wie Waschmaschine, Spülmaschine, Herd, Ofen, Staubsauger, elektrische Zahnbürste, Musikanalage und weiteres sowie von Gesundheitsgeräten wie Ergometer, Laufband oder ähnliches verwendet werden.

Der mindestens eine Sensor kann auch Teil einer Haustechnik sein. Gegebenenfalls können die manuelle Bedienung von Lichtschalter, Heizungsregler, Jalousien, Garagentor und/oder weiteren Anlagen über eine Benutzerschnittstelle der Haustechnik Informationen über eine Position, eine Bewegung oder eine Aktivität liefern. Der Getränkeautomat kann in Abhängigkeit von der erfassten Information eingestellt werden, sofern die Steuereinrichtung über das Kommunikationsmodul mit den Sensoren und der Haustechnik entsprechend verbunden beziehungsweise vernetzt ist. Wenn das Kommunikationsmodul dazu eingerichtet ist, mit der Haustechnik und/oder mit Haushaltsgeräten über WLAN zu kommunizieren, kann der Getränkeautomat Getränke entsprechend des erfassten Nutzerverhaltens zubereiten, ohne dass eine manuelle Nutzereingabe am Getränkeautomaten erforderlich ist. Weiterhin kann der Getränkeautomat in einem System für die Bedienung von einer Haustechnik eingebunden sein. Auf diese Weise kann die Betriebsweise des Getränkeautomaten mit weiteren Geräten zusammen koordiniert und/oder vorprogrammiert werden.

Vorzugsweise ist der mindestens eine Sensor ein Bewegungssensor und/oder eine GPS-Einheit. Auf diese Weise kann die Position beziehungsweise das Verhalten des Nutzers nicht nur im Haus, sondern in einem erweiterten Bereich erfasst werden. Der Bewegungssensor kann im und/oder außerhalb des Hauses oder der Wohnung platziert sein, wodurch die Erfassung einer Bewegung in einem Garten, in einer Garage oder an einem anderen Ort ermöglicht wird. Ein solcher Sensor kann ein Bewegungssensor sein, der für das Ein- und Ausschalten von Beleuchtungen vorgesehen ist, eine Kamera zur Überwachung des Wohnortes oder ein Sensor, der dazu eingerichtet ist, den Zustand (auf- oder zugeschlossen) einer Tür zu erfassen. Der Bewegungssensor kann auch einen in einem Smartphone oder in einer Smartwatch integrierter piezoelektrische Sensor sein.

Die GPS-Einheit kann in einem Smartphone oder in einem Auto integriert sein. Dadurch kann die Position des Nutzers im Haus oder außerhalb des Hauses /der Wohnung erfasst werden. Insbesondere Positionsänderungen, die regelmäßig vorkommen, können durch eine solche Einheit erkannt und somit als Nutzergewohnheit gespeichert werden. Wenn zum Beispiel der Nutzer regelmäßig erst von seiner Arbeitsstelle nach Hause fährt und dann ein Getränk zubereiten lässt, kann nach Speicherung dieses wiederholten Nutzerverhaltens eine Nutzungswahrscheinlichkeit entsprechend eingestellt werden. Auf diese Weise wird ein Getränk automatisch zubereitet, wenn der Nutzer von der Arbeit zuhause ankommt.

In einem weiteren Verfahren zum Betrieb des Getränkeautomaten, kann die mindestens eine Information über eine Nutzungswahrscheinlichkeit entsprechend mindestens einer mittels mindestens eines Sensors erfassten Information über eine Bewegung, eine Aktivität, eine Uhrzeit und/oder eine Position bestimmt werden. Die Informationen können einzeln oder kombiniert erfasst werden. Ein anschließender Vergleich der erfassten Informationen mit den gespeicherten Schwellenwerten ergibt die Nutzungswahrscheinlichkeit. Wenn die Informationen zeitlich aufgelöst erfasst werden, können Muster des Nutzerverhaltens erkannt werden und somit die Schwellenwerte auf das individuelle Nutzerverhalten eingestellt werden. Auf diese Weise kann die Betriebsweise des Getränkeautomaten automatisch an das tatsächliche Nutzerverhalten angepasst werden. Dadurch ist die Optimierung des Getränkeautomaten auf eine energiesparende Betriebsweise möglich, da nur der tatsächliche Bedarf des Nutzers betrachtet wird und der Getränkeautomat automatisch ausgeschaltet werden kann, wenn er nicht gebraucht wird.

Dank der vorliegenden Erfindung kann also der Bedarf eines Nutzers bei der Zubereitung von Getränken berücksichtigt und die Betriebsweise eines Getränkeautomaten auf Energiesparen optimiert und vereinfacht werden.

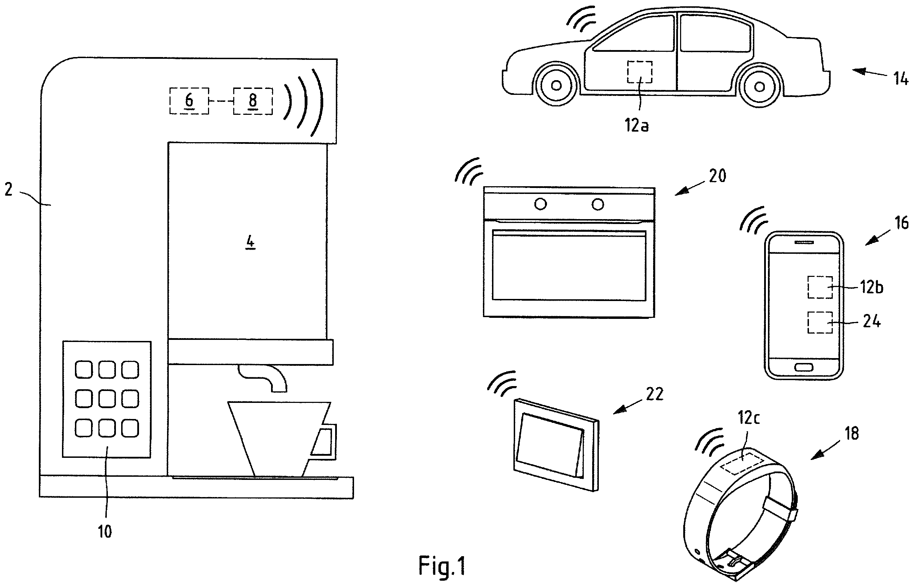

Im Folgenden wird ein bevorzugtes Ausführungsbeispiel der Erfindung anhand der beigefügten Zeichnung näher erläutert. In der Zeichnung zeigt
- Fig. 1: ein Ausführungsbeispiel eines erfindungsgemäßen Getränkeautomaten.

In der Fig. 1 ist ein Getränkeautomat 2 zur automatischen Zubereitung von Getränken mit einer Einrichtung 4 zur Zubereitung von Getränken, mit einer Steuereinrichtung 6 und mit einem Kommunikationsmodul 8 gezeigt, wobei die Steuereinrichtung 6 dazu eingerichtet ist, den Getränkeautomaten 2 in Abhängigkeit mindestens einer Information über eine Nutzungswahrscheinlichkeit zu steuern, und wobei die mindestens eine Information über eine Nutzungswahrscheinlichkeit einem Nutzerverhalten entspricht.

In der Fig. 1 sind die Steuereinrichtung 6 und das Kommunikationsmodul 8 über ein Kabel verbunden. In der gezeigten Ausgestaltung des Getränkeautomaten 2 ist eine Benutzerschnittstelle 10 in Form eines Touchscreens vorgesehen.

Informationen über ein Nutzerverhalten werden durch mehrere Sensoren erfasst. In der Fig. 1 zeigen die Bezugszeichen 12a, 12b und 12c GPS-Einheiten, die in verschiedenen Vorrichtungen integriert sind. Die GPS- Einheit 12a ist in einem Auto 14 integriert, die GPS-Einheit 12b in einem Smartphone 16 und die GPS-Einheit 12c in einem Activity-Tracker 18 (auch Fitnessuhr). Weitere Sensoren sind in Form eines Backofens 20 und eines Lichtschalters 22 gezeigt. Die im Rahmen der vorliegenden Erfindung möglichen Sensoren können weitere Ausgestaltungsformen annehmen. Die Informationen werden von den Sensoren zu dem Kommunikationsmodul 8 über eine kabellose Verbindung übertragen, wie in der Fig. 1 mit konzentrischen Halbkreisen gezeigt ist.

Die Steuereinrichtung 6 ist über das Kommunikationsmodul 8 mit den Sensoren zur Erfassung mindestens einer Information über eine Bewegung, eine Aktivität, eine Uhrzeit und/oder eine Position verbunden. Die verschiedenen GPS-Einheiten 12a, 12b und 12c können eine oder mehrere Informationen über eine Bewegung, eine Aktivität und/oder eine Position liefern. Das Smartphone 16 sowie der Activity-Tracker 18 und der Backofen 20 können eine Uhr oder einen Chronometer aufweisen, so dass eine Information über eine Uhrzeit und/oder eine Dauer erfasst wird.

In dem gezeigten Ausführungsbeispiel ist das Nutzerverhalten eine Information über eine Bewegung, eine Aktivität, eine Uhrzeit und/oder eine Position. Die in dem Auto 18, in dem Smartphone 20 oder in dem Activity-Tracker 22 integrierte GPS-Einheit 12a, 12b oder 12c liefert zu Beispiel eine zeitaufgelöste Information über eine Position. Eine Position, eine Bewegung oder eine Aktivität können auch mit Bewegungsmeldern festgestellt werden, die im Haus/in der Wohnung oder in einem Garten integriert sind. Wenn das Smartphone 16 dazu eingerichtet ist, eine Bewegung zu erfassen, beispielsweise durch eine piezoelektrische Einheit 24, können sowohl eine Information über eine Bewegung als auch eine geographische Position erfasst werden. Gegebenenfalls ist der Sensor ein Bewegungssensor und/oder eine GPS-Einheit.

Weitere Ausgestaltungsformen sind für die Sensoren vorstellbar, wie zum Beispiel Sensoren, die in einem Haushalt- und/oder Gesundheitsgerät integriert sind. Der Betriebszustand von Haushaltsgeräten wie der in der Fig. 1 gezeigte Backofen 22 kann einen Indikator für die Anwesenheit des Nutzers im Haus sein. Auf eine ähnliche Weise kann der Betriebszustand beziehungsweise die Information über das Anschalten eines Laufbands oder eines Ergometers eine Information über eine Aktivität oder eine Anwesenheit liefern.

In der Fig. 1 ist ein Lichtschalter 22 gezeigt. Wenn der Lichtschalter 22 mit einer Haustechnik verbunden oder Teil einer Haustechnik ist, können Informationen über den Betriebszustand des Lichtschalters 22 gewonnen, gespeichert und weitergeleitet werden. Eine manuelle Tätigung des Lichtschalters 22 kann dadurch erfasst und als Indikator für die Anwesenheit eines Nutzers verwendet werden. In dieser Hinsicht ist der mit einer Haustechnik verbundene Lichtschalter 22 ein Sensor, der Teil einer Haustechnik ist. Auf diese Weise können weitere mit der Haustechnik verbundene Vorrichtungen als Sensor verwendet werden, wie zum Beispiel Überwachungskameras und/oder eine Haustürklinke. Weitere Vorrichtungen können im Rahmen der vorliegenden Erfindung als Sensor verwendet werden.

Die von den Sensoren erfassten und über das Kommunikationsmodul 8 übertragenen Informationen werden in einer Datenbank der Steuereinrichtung 6 gespeichert. Die Analyse der Information läuft über einen Vergleich der erfassten Informationen über ein Nutzerverhalten mit Schwellwerten, die in der Datenbank vorgespeichert sind. Die Schwellenwerte sind entweder von dem Hersteller des Getränkeautomaten 2 vordefiniert oder über die Benutzerschnittstelle 10 eingegeben worden. Im Rahmen der Analyse der erfassten Informationen, können Informationen, die durch mehrere Sensoren erfasst wurden, miteinander kombiniert werden, um ein Nutzerverhalten zu bestimmen. So kann die Anwesenheit eines Nutzers beispielsweise anhand der durch die GPS-Einheit 12c erfassten Position und die durch die piezoelektrische Einheit 24 erfasste Bewegung bestimmt werden. Ein Vergleich mit einem Schwellenwert ergibt die Nutzungswahrscheinlichkeit des Getränkeautomaten 2.

## Patentansprüche

1. Getränkeautomat zur automatischen Zubereitung von Getränken
- mit mindestens einer Einrichtung (4) zur Zubereitung von Getränken,
- mit mindestens einer Steuereinrichtung (6) und
- mit mindestens einem Kommunikationsmodul (8)
**dadurch gekennzeichnet,**
- **dass** die Steuereinrichtung (6) dazu eingerichtet ist, den Getränkeautomaten (2) in Abhängigkeit mindestens einer Information über eine Nutzungswahrscheinlichkeit zu steuern,
- wobei die mindestens eine Information über eine Nutzungswahrscheinlichkeit einem Nutzerverhalten entspricht.

2. Getränkeautomat nach Anspruch 1,
**dadurch gekennzeichnet,**
**dass** das Nutzerverhalten mindestens eine Information über eine Bewegung, eine Aktivität, eine Uhrzeit und/oder eine Position ist.

3. Getränkeautomat nach Anspruch 1 oder 2,
**dadurch gekennzeichnet,**
**dass** die Steuereinrichtung (6) über das mindestens eine Kommunikationsmodul (8) mit mindestens einem Sensor (12a, 12b, 12c, 16, 18, 20, 22, 24) zur Erfassung mindestens einer Information über eine Bewegung, eine Aktivität, eine Uhrzeit und/oder eine Position verbunden ist.

4. Getränkeautomat nach Anspruch 3,
**dadurch gekennzeichnet,**
**dass** der mindestens eine Sensor (12a, 12b, 12c, 16, 18, 20, 22, 24) in einem Haushalt- und/oder Gesundheitsgerät integriert ist.

5. Getränkeautomat nach Anspruch 3 oder 4,
**dadurch gekennzeichnet,**
**dass** der mindestens eine Sensor (12a, 12b, 12c, 16,18, 20, 22, 24) Teil einer Haustechnik ist.

6. Getränkeautomat nach einem der Ansprüche 3 bis 5,
**dadurch gekennzeichnet,**
**dass** der mindestens eine Sensor (12a, 12b, 12c, 16, 18, 20, 22, 24) ein Bewegungssensor (24) und/oder eine GPS-Einheit (12a, 12b, 12c) ist.

7. Verfahren zum Betrieb eines Getränkeautomaten nach einem der Ansprüche 1 bis 6,
bei dem der Getränkeautomat durch eine Steuereinrichtung in Abhängigkeit von mindestens einer Information über eine Nutzungswahrscheinlichkeit gesteuert wird.

8. Verfahren nach Anspruch 7,
bei dem die mindestens eine Information über eine Nutzungswahrscheinlichkeit entsprechend mindestens einer mittels mindestens eines Sensors erfassten Information über eine Bewegung, eine Aktivität, eine Uhrzeit und/oder eine Position bestimmt wird.
